Europäisches Patentamt

European Patent Office

Office européen des brevets

(19)

(11) Veröffentlichungsnummer: **0 081 168**
**B1**

(12)

# EUROPÄISCHE PATENTSCHRIFT

(45) Veröffentlichungstag der Patentschrift:
**21.11.84**

(21) Anmeldenummer: **82110971.7**

(22) Anmeldetag: **27.11.82**

(51) Int. Cl.³: **C 09 B 5/28**, C 07 D 209/82,
C 09 B 1/48, C 07 C 97/24

(54) **Verfahren zur Herstellung von 4,4'-Dibenzoylaminodianthrimidcarbazol.**

(30) Priorität: **09.12.81 DE 3148695**

(43) Veröffentlichungstag der Anmeldung:
**15.06.83 Patentblatt 83/24**

(45) Bekanntmachung des Hinweises auf die Patenterteilung:
**21.11.84 Patentblatt 84/47**

(84) Benannte Vertragsstaaten:
**CH DE FR GB LI**

(56) Entgegenhaltungen:
**DE - B - 1 085 991**
**FR - A - 2 372 207**
**US - A - 1 994 622**
**US - A - 3 230 232**

**HOUBEN-WEYL, Band 7, Teil III, 4. Auflage, Chinone,**
**Georg Thieme Verlag, Stuttgart, DE, Seite 213**

(73) Patentinhaber: **BAYER AG, Konzernverwaltung RP**
**Patentabteilung, D-5090 Leverkusen 1 Bayerwerk (DE)**

(72) Erfinder: **Stawitz, Josef, Dr., Gerstenkamp 21,**
**D-5000 Köln 80 (DE)**

## Beschreibung

Die Erfindung betrifft ein Verfahren zur Herstellung von 4,4'-Dibenzoylaminodianthrimidcarbazol, dadurch gekennzeichnet, daß man 4,4'-Diamino-1,1'-dianthrimid im Eintopfverfahren benzoyliert und carbazoliert, wobei das 4,4'-Diaminodianthrimid dadurch erhalten worden ist, daß man ein Gemisch aus 1-Aminoanthrachinon und 1,4-Diaminoanthrachinon im Molverhältnis 0,9 : 1 bis 1,4 : 1, bevorzugt 1 : 1 bis 1,1 : 1, in 30—60%iger $H_2SO_4$, vorzugsweise 40- bis 60%iger $H_2SO_4$, oxidiert und man anschließend in an sich bekannter Weise reduziert.

Bei der Herstellung des 4,4'-Diaminodianthrimid empfiehlt es sich, ein feinverteiltes Gemisch der Aminoanthrachinone einzusetzen.

Die Oxidation des Gemischs erfolgt im allgemeinen bei Temperaturen von etwa 0 bis 80° C, vorzugsweise bei etwa 30 bis etwa 60° C.

Die Oxidation erfolgt mit gebräuchlichen Oxidationsmitteln wie sauerstoffabgebende Schwermetallsalze oder -oxide oder Peroxodisulfaten, Peroxosulfaten oder Wasserstoffperoxid oder Gemischen dieser Verbindungen.

Beispielhaft seien genannt: $MnO_2$, $KMnO_4$, $CrO_3$, $K_2Cr_2O_7$, $Na_2Cr_2O_7$, Alkali-peroxodisulfate, Chlorsäure, Chlorate, Ammoniumperoxodisulfat und Wasserstoffperoxid.

Bevorzugte Verwendung findet Kaliumperoxodisulfat.

4,4'-Diaminodianthrimid läßt sich im wesentlichen nach zwei Verfahren herstellen:

1. Kondensation von 1-Chloranthrachinon mit 1-Aminoanthrachinon unter Kupferkatalyse gemäß einer Ullmann-Reaktion (Ullmann's Enzyklopädie der technischen Chemie, Band 7, Seite 585, 3. Auflage, 1974), Nitrierung des entstandenen in 4,4'-Stellung unsubstituierten Dianthrimid in Borschwefelsäure und Reduktion des erhaltenen 4,4'-Dinitroanthrimid.
2. Kondensation von 4-Benzoylamino-1-chloranthrachinon mit 1-Amino-4-benzoylaminoanthrachinon unter Kupferkatalyse und Verseifung der Benzoylaminogruppen gemäß dem Verfahren der CH-PS 573 959.

Die Oxidation eines Gemisches von 1,4-Diaminoanthrachinon und 1-Aminoanthrachinon zum 4,4'-Diaminodianthrimid ist aus Houben/Weyl (Band 7, Teil 3, Seite 213, 4. Auflage) bekannt. Nach dieser Literaturstelle soll das Dianthrimid entstehen, wenn man die genannten Komponenten in 85- bis 96%iger $H_2SO_4$ mit Braunstein behandelt. Die Nacharbeitung ergibt, daß gerade in der hochkonzentrierten $H_2SO_4$ die Reaktion gar nicht, oder aber mit äußerst unbefriedigendem Ergebnis hinsichtlich Ausbeute und Qualität des Endproduktes abläuft.

Überraschenderweise gelingt es nach dem erfindungsgemäßen Verfahren, in kurzer Zeit, in guten Ausbeuten 4,4'-Diaminodianthrimid großer Reinheit herzustellen.

Besonders überraschend ist,

a) daß das unter den Oxidationsbedingungen intermediär gebildete, hydrolyseempfindliche Anthrachinon-1,4-diimin in der wasserhaltigen $H_2SO_4$ fast quantitativ mit 1-Aminoanthrachinon zum 4,4'-Diaminodianthrimid reagiert;

b) daß unter den Reaktionsbedingungen das bereits gebildete Dianthrimid bzw. sein Chinonimin, wenn überhaupt, nur in sehr geringem Umfang zu 1,4-Diaminoanthrachinon und 4-Amino-1-hydroxyanthrachinon hydrolysiert wird;

c) daß, wenn überhaupt, nur in sehr geringem Umfang die Konkurrenzreaktion der Selbstkondensation von 1-Aminoanthrachinon zu Amino-tri- oder -poly-anthrimiden gemäß der DE-AS 1 085 991 stattfindet.

Aus 4,4'-Diaminodianthrimid erhält man den Farbstoff C. I. Vat Black 27 (C. I. 69 005)

a) durch Benzoylierung in Nitrobenzol und Carbazolierung des isolierten Dibenzoylaminodianthrimid in konzentrierter $H_2SO_4$ gemäß BIOS 1493, S. 31;

b) durch Benzoylierung in 20%igem Oleum und Carbazolierung durch Verdünnung auf 96%ige $H_2SO_4$ im Eintopfverfahren gemäß der US-PS 3 230 232.

Gemäß dem erfindungsgemäßen Verfahren erhält man C. I. Vat Black 27 in hervorragenden Ausbeuten und in wesentlich besserer Qualität als bei Einsatz des nach üblichen Verfahren z. B. durch Nitrierung und Reduktion von Dianthrimid hergestellten Diaminodianthrimid. So ist z. B. die IR-Remission, die für die Qualität des Farbstoffs entscheidend ist, deutlich verbessert.

Man erhält auf dem erfindungsgemäßen Wege, ausgehend von 1-Aminoanthrachinon und 1,4-Diaminoanthrachinon den Farbstoff C. I. Vat Black 27 nach Methode b) in zwei Reaktionsstufen in hoher Qualität, während nach den bekannten Verfahren mindestens vier Stufen notwendig sind. Auf dem Wege der Kondensation von 4-Benzoylamino-1-chloranthrachinon und 1-Amino-4-benzoylaminoanthrachinon gelingt die Herstellung des Farbstoffs zwar auch in einem zweistufigen Prozeß, wobei aber die genannten Einsatzprodukte zuerst in kostspieliger Weise aus 1-Aminoanthrachinon und 1,4-Diaminoanthrachinon, die beim erfindungsgemäßen Verfahren direkt eingesetzt werden, durch Benzoylierung und Chlorierung bzw. Benzoylierung und Verseifung hergestellt werden müssen.

Das neue Verfahren ist somit den bekannten Verfahren in seiner Einfachheit, der Kürze des Weges und durch die Tatsache, daß ohne organische Lösungsmittel gearbeitet werden kann, weit überlegen.

Vorzugsweise werden beim erfindungsgemäßen Verfahren pro Mol 1,4-Diaminoanthrachinon etwa 1,0 bis 2,5 Mol Oxidationsmittel, vorzugsweise 1,5 Mol bis 2,1 Mol eingesetzt.

Zur Reduktion bei der Herstellung des 4,4'-Diaminodianthrimid können die bekannten, in schwefelsaurem Medium wirksamen Reduktionsmittel wie $SnCl_2$, $FeSO_4$, $SO_2$, Di- und Trihydroxybenzole, Alkalisalze der Oxo- und Thiosäuren von niederwertigem Schwefel sowie Sauerstoffsäuren von Phosphor niedriger Oxidationsstufen sowie ihre Salze verwendet werden. Bevorzugte Reduktionsmittel, die einzeln oder als Mischung angewendet werden, sind $SO_2$, $Na_2SO_3$, $NaHSO_3$, $FeSO_4$ sowie $H_3PO_3$ und ihre Alkalisalze. Zur Vervollständigung der Reduktion ist Erwärmen vorteilhaft.

Beim erfindungsgemäßen Verfahren kann eine Suspension von fein gemahlenem 1-Aminoanthrachinon und 1,4-Diaminoanthrachinon in 30- bis 60%iger $H_2SO_4$ oxidiert werden. Bevorzugt werden das 1-Aminoanthrachinon und das 1,4-Diaminoanthrachinon nacheinander, aus ökonomischen Gründen ganz besonders bevorzugt gemeinsam verpastet, da diese Arbeitsweise keine Nachteile hinsichtlich der Qualität der Produkte hat.

Eine besonders ökonomische Variante des beanspruchten Verfahrens besteht darin, daß man Leuko-1,4-diaminoanthrachinon in konzentrierter Schwefelsäure gemäß DE-PS 627 482 zu 1,4-Diaminoanthrachinon oxidiert und dieses ohne Zwischenisolierung zusammen mit 1-Aminoanthrachinon verpastet.

Besonders bevorzugt bei der Herstellung von 4,4'-Diaminodianthrimid ist die Oxidation in 45—55%iger $H_2SO_4$.

Das Oxidationsmittel kann in Wasser oder in einem Schwefelsäure-Wasser-Gemisch vorgelegt und das schwefelsaure Gemisch der Aminoanthrachinone zugetropft werden. Vorteilhafterweise dosiert man jedoch zur Paste der Aminoanthrachinone das Oxidationsmittel kontinuierlich oder portionsweise zu.

Die Reaktion des 1,4-Chinonimin mit dem 1-Aminoanthrachinon erfolgt meist bereits bei tiefer Temperatur rasch. Aus ökonomischen Gründen und aus Gründen der Rührbarkeit — besonders bei konzentriertem Reaktionsansatz — wird bei der Umsetzung eine Temperatur von 10—80°C, insbesondere 30—50°C, bevorzugt.

Die Benzoylierung erfolgt nach üblichen Verfahren. Vorzugsweise arbeitet man in 10—30%igem, vorzugsweise 20%igem Oleum mit Benzoesäureanhydrid, Benzoylchlorid oder bevorzugt Benzoesäure bei etwa 20 bis etwa 50°C, besonders bevorzugt bei 35 bis 45°C.

Zur Carbazolierung wird auf 90—98%ige, vorzugsweise 96—98%ige $H_2SO_4$ verdünnt. Man carbazoliert vorzugsweise bei 20 bis 60°C, besonders bevorzugt bei 30 bis 50°C.

### Beispiel 1

a)  52,0 g 1,4-Diaminoanthrachinon (92%ig) und 47,0 g 1-Aminoanthrachinon (98%ig) werden in 512 g 96%iger $H_2SO_4$ gelöst, und die Lösung wird unter gutem Rühren und Kühlen in 460 g Wasser so eingetropft, daß die Temperatur 40—50°C nicht übersteigt. Nach Kühlen auf ca. 15°C trägt man unter gutem Rühren innerhalb von 3—4 h 110,0 g Kaliumperoxodisulfat ein und läßt dabei die Temperatur langsam auf ca. 20°C ansteigen. Nach 2—3 h bei 20°C tropft man unter gutem Rühren 80 ml 40%ige $NaHSO_3$-Lösung ein, gibt noch 15,0 g $FeSO_4 \cdot 7 H_2O$ zu, erhitzt in 30 min auf 80°C und hält diese Temperatur 1 h. Das Produkt wird heiß abgesaugt, mit Wasser neutral gewaschen und bei 100°C getrocknet. Man erhält so 98,1 g 4,4'-Diaminodianthrimid (82%ig), entsprechend 87% der Theorie. Ohne Nachteil für Qualität und Ausbeute kann bei ansonsten gleicher Arbeitsweise das Oxidationsmittel Kaliumperoxodisulfat teilweise oder vollständig durch Schwermetalloxide wie Braunstein ersetzt werden.

b)  In 230 g 20%iges Oleum werden bei 25—30°C 30,0 g des nach a) hergestellten Dianthrimid eingetragen und 30 min nachgerührt. Dann gibt man 25,0 g Bezoesäure zu, erwärmt die Schmelze 3 h auf 40°C, gibt noch 2,0 g Benzoesäure zu und erwärmt noch eine weitere Stunde auf 40°C. Nach Abkühlen auf 5—10°C tropft man 16 ml Wasser so zu, daß die Temperatur auf 45—50°C steigt, wobei die Carbazolierung gegebenenfalls nach Zusatz einer Spur Reduktionsmittel unter Erwärmen auf 55—60°C eintritt. Die Schmelze wird in 3 h kaltgerührt und dann in 600 ml Wasser eingerührt. Dann wird 30 min auf 70°C unter Zusatz von 40 ml Chlorlauge (enthält ca. 13% aktives Chlor) erhitzt, heiß abgesaugt, mit heißem Wasser neutral gewaschen und bei 100°C getrocknet. Man erhält 37,2 g eines dunklen Pulvers, das Baumwolle kräftig oliv entsprechend dem erhaltenen Farbstoff C. I. Vat Black 27 färbt.

### Beispiel 2

In eine Lösung von 52,0 g Leuko-1,4-diaminoanthrachinon (94%) in 410 g 96%iger $H_2SO_4$ wird bei 100°C so lange Chlor eingeleitet, bis die Leukoverbindung gerade verschwunden ist. Überschüssiges Chlor sowie Chlorwasserstoff werden mit Luft ausgetrieben. Anschließend läßt man auf Raumtemperatur abkühlen, trägt dabei 48,0 g 1-Amino-antrachinon (98%) ein und tropft dann die Lösung in 410 g Wasser. Innerhalb von ca. 1 h werden bei 40—50°C in die Paste portionsweise 95,0 g Kaliumperoxodisulfat eingetragen. Man läßt ca. 30 min bei 30—50°C nachrühren, saugt ab und wäscht mit Wasser nahezu neutral. Der Nutschkuchen wird mit 300 ml 10%iger $NaHSO_3$-Lösung, dann mit Wasser gewaschen und bei 100°C getrocknet. Man erhält 102,3 g 4,4'-Diamino-1,1'-dianthrimid (79%ig), das entspricht 87% der Theorie.

Ohne Nachteil für Qualität und Ausbeute kann bei ansonsten gleicher Arbeitsweise das Leuko-1,4-diaminoanthrachinon mit Sulfurylchlorid, Braunstein oder bromhaltiger Luft oxidiert werden.

Bei der Benzoylierung und Carbazolierung von 30,0 g des so erhaltenen 4,4'-Diamino-1,1'-dianthrimids im Eintopfverfahren gemäß Beispiel 1, erhält man 39,8 g Farbstoff, der den gleichen Farbton und die gleich gute IR-Remission wie der nach Beispiel 1 erhaltene Farbstoff besitzt.

### Beispiel 3

52,0 g 1,4-Diaminoanthrachinon (92%ig) und 47,0 g 1-Aminoanthrachinon (98%ig) werden in 420 g 96%iger $H_2SO_4$ gelöst und die Schmelze unter gutem Rühren und Kühlen in 590 ml Wasser so eingetropft, daß die Temperatur 40—50°C nicht übersteigt. Nach Kühlen auf 15°C werden unter gutem Rühren in 3—4 h 110,0 g Kaliumperoxodisulfat portionsweise eingetragen. Dann läßt man den Reaktionsansatz auf 20°C kommen und rührt noch 2—3 h bei dieser Temperatur. Dann tropft man bei Raumtemperatur 200 ml 40%ige $NaHSO_3$-Lösung ein, erhitzt in 30 min auf 80°C und hält diese Temperatur 1 h. Das Produkt wird heiß abgesaugt und mit Wasser neutral gewaschen. Nach dem Trocknen erhält man 96,0 g 4,4'-Diaminodianthrimid (75%ig), das entspricht 78% der Theorie.

Bei der Benzoylierung und Carbazolierung von 30,0 g des so erhaltenen 4,4'-Diaminodianthrimid im Eintopfverfahren gemäß Beispiel 1, erhält man 33,6 g Farbstoff, der etwas brauner färbt als der nach Beispiel 1 erhaltene Farbstoff und überdies eine veränderte IR-Remission aufweist.

### Beispiel 4

52,0 g 1,4-Diaminoanthrachinon (92%ig) und 47,0 g 1-Aminoanthrachinon (98%ig) werden in 400 g 96%iger $H_2SO_4$ gelöst und in eine Mischung aus 400 g 60%iger $H_2SO_4$ und 240 g Wasser unter gutem Rühren und Kühlen getropft. Nach Kühlen auf 15°C werden dann unter gutem Rühren 1,0 g Braunstein und anschließend in 3—4 h 110,0 g Kaliumperoxodisulfat eingetragen. Man rührt 3 h bei 20°C, tropft dann bei Raumtemperatur 200 ml 40%ige $NaHSO_3$-Lösung zu und erhitzt 1,5 h auf ca. 80°C. Es wird heiß abgesaugt, mit Wasser neutral gewaschen und bei 100°C getrocknet. Man erhält 91,2 g 81%iges 4,4'-Diaminodianthrimid, das entspricht 80% der Theorie.

Die Benzoylierung und Carbazolierung von 30,0 g des so erhaltenen Diaminodianthrimid entsprechend dem Verfahren des Beispiels 1 ergibt 37,4 g eines Farbstoffs, der in Farbton und Farbstärke dem des Beispiels 1 entspricht und nur eine geringfügig veränderte IR-Remission besitzt.

## Patentansprüche

1. Verfahren zur Herstellung von 4,4'-Dibenzoylaminoanthrimidcarbazol, dadurch gekennzeichnet, daß man 4,4'-Diamino-1,1'-dianthrimid im Eintopfverfahren benzoyliert und carbazoliert, wobei das 4,4'-Diaminodianthrimid dadurch erhalten worden ist, daß man ein Gemisch aus 1-Aminoanthrachinon und 1,4-Diaminoanthrachinon im Molverhältnis 0,9 : 1 bis 1,4 : 1 in 30—60%iger $H_2SO_4$ oxidiert und man anschließend reduziert.

2. Verfahren gemäß Anspruch 1, dadurch gekennzeichnet, daß man ein feinteiliges Gemisch der Anthrachinone einsetzt.

3. Verfahren gemäß den Ansprüchen 1—2, dadurch gekennzeichnet, daß man ein Molverhältnis 1-Aminoanthrachinon zu 1,4-Diaminoanthrachinon wie 1 : 1 bis 1,1 : 1 einsetzt.

4. Verfahren gemäß den Ansprüchen 1—3, dadurch gekennzeichnet, daß man in 40—60%iger $H_2SO_4$ oxidiert.

5. Verfahren gemäß den Ansprüchen 1—3, dadurch gekennzeichnet, daß man in 45—55%iger $H_2SO_4$ oxidiert.

6. Verfahren gemäß den Ansprüchen 1—5, dadurch gekennzeichnet, daß man mit einem sauerstoffabgebenden Schwermetallsalz oder -oxid insbesondere Braunstein oxidiert.

7. Verfahren gemäß den Ansprüchen 1—5, dadurch gekennzeichnet, daß man mit einem Peroxosulfat oder Peroxodisulfat insbesondere Kaliumperoxodisulfat oder Wasserstoffperoxid oxidiert.

8. Verfahren gemäß den Ansprüchen 1—7, dadurch gekennzeichnet, daß man mit $SO_2$, $Na_2SO_3$, $NaHSO_3$, $FeSO_4$ oder $H_3PO_3$ bzw. ihrer Alkalisalze oder Gemischen dieser Reduktionsmittel reduziert.

9. Verfahren gemäß den Ansprüchen 1—8, dadurch gekennzeichnet, daß man das verwendete 1,4-Diaminoanthrachinon durch Oxidation von Leuko-1,4-diaminoanthrachinon in Schwefelsäure herstellt und ohne Zwischenisolierung nach Verpastung mit 1-Aminoanthrachinon umsetzt.

## Claims

1. Process for the preparation of 4,4'-dibenzoylaminoanthrimidecarbazole, characterised in that 4,4'-diamino-1,1'-dianthrimide is benzoylated and carbazolated in a one-pot process, the 4,4'-diaminodianthrimide having been obtained by oxidising a mixture of 1-aminoanthraquinone and 1,4-diaminoanthraquinone in a molar ratio of 0.9 : 1 to 1.4 : 1 in 30—60% strength $H_2SO_4$ and then reducing the product.

2. Process according to claim 1, characterised in that a finely divided mixture of the anthraquinones is used.

3. Process according to claims 1—2, characterised in that a molar ratio of 1-aminoanthraquinone to 1,4-diaminoanthraquinone of 1 : 1 to 1.1 : 1 is used.

4. Process according to claims 1—3, characterised in that oxidation is carried out in 40—60% strength $H_2SO_4$.

5. Process according to claims 1—3, characterised in that oxidation is carried out in 45—55% strength $H_2SO_4$.

6. Process according to claims 1—5, characterised in that oxidation is carried out using an oxygen-donating heavy metal salt or heavy metal oxide, in particular manganese dioxide.

7. Process according to claims 1—5, characterised in that oxidation is carried out using a peroxosulphate or peroxodisulfate, in particular potassium peroxodisulfate or hydrogen peroxide.

8. Process according to claims 1—7, characterised in that reduction is carried out using $SO_2$, $Na_2SO_3$, $NaHSO_3$, $FeSO_4$ or $H_3PO_3$ or alkali metal salts thereof of mixtures of these reducing agents.

9. Process according to claims 1—8, characterised in that the 1,4-diaminoanthraquinone used is prepared by oxidising leuco-1,4-diamino-anthraquinone in sulphuric acid and is reacted without intermediate isolation after being pasted with 1-aminoanthraquinone.


**Revendications**

1. Procédé de production de 4,4'-dibenzoyla-minoanthrimide-carbazole, caractérisé en ce qu'on benzoyle et on carbazole le 4,4'-diamino-1,1'-dianthrimide par un procédé direct, le 4,4'-diaminodianthrimide ayant été obtenu par oxydation d'un mélange de 1-amino-anthraquinone et de 1,4-diamino-anthraquinone dans le rapport molaire de 0,9 : 1 à 1,4 : 1 dans de l'acide sulfurique à 30—60% et réduction subséquente.

2. Procédé suivant la revendication 1, caractérisé en ce qu'on utilise un mélange finement divisé des anthraquinones.

3. Procédé suivant les revendications 1—2, caractérisé en ce qu'on utilise un rapport molaire de la 1-amino-anthraquinone à la 1,4-diamino-anthraquinone de 1 : 1 à 1,1 : 1.

4. Procédé suivant les revendications 1—3, caractérisé en ce qu'on effectue l'oxydation dans de l'acide sulfurique à 40—60%.

5. Procédé suivant les revendications 1—3, caractérisé en ce qu'on effectue l'oxydation dans de l'acide sulfurique à 45—55%.

6. Procédé suivant les revendications 1—5, caractérisé en ce qu'on effectue l'oxydation avec un sel ou un oxyde de métal lourd libérant de l'oxygène, notamment le bioxyde de manganèse.

7. Procédé suivant les revendications 1—5, caractérisé en ce qu'on effectue l'oxydation avec un peroxosulfate ou un peroxodisulfate, notamment le peroxodisulfate de potassium ou le peroxyde d'hydrogène.

8. Procédé suivant les revendications 1—7, caractérisé en ce qu'on effectue la réduction avec $SO_2$, $Na_2SO_3$, $NaHSO_3$, $FeSO_4$ ou $H_3PO_3$ ou ses

sels alcalins ou des mélanges de ces agents réducteurs.

9. Procédé suivant les revendications 1—8, caractérisé en ce qu'on prépare la 1,4-diamino-anthraquinone utilisée par oxydation de leuco-1,4-diamino-anthraquinone dans l'acide sulfurique et on la fait réagir sans isolement intermédiaire après mise en pâte avec de la 1-amino-anthraquinone.